(19) Europäisches Patentamt
European Patent Office
Office européen des brevets

(11) **EP 0 892 253 B1**

## (12) EUROPÄISCHE PATENTSCHRIFT

(45) Veröffentlichungstag und Bekanntmachung des Hinweises auf die Patenterteilung:
**27.03.2002   Patentblatt 2002/13**

(51) Int Cl.⁷: **G01F 3/08**

(21) Anmeldenummer: **98109965.8**

(22) Anmeldetag: **02.06.1998**

(54) **Ringkolbenzähler**

Ring piston flowmeter

Débitmètre à piston rotatif

(84) Benannte Vertragsstaaten:
**BE ES FR GB IT**

(30) Priorität: **17.07.1997  DE 19730605**

(43) Veröffentlichungstag der Anmeldung:
**20.01.1999   Patentblatt 1999/03**

(73) Patentinhaber: **SPANNER-POLLUX GmbH**
**D-67063 Ludwigshafen (DE)**

(72) Erfinder: **Lang, Gerhard**
**67134 Birkenheide (DE)**

(74) Vertreter: **Patentanwälte Möll und Bitterich**
**Westring 17**
**76829 Landau/Pfalz (DE)**

(56) Entgegenhaltungen:
**EP-A- 0 153 446**          **WO-A-94/07111**
**FR-A- 454 609**

**Beschreibung**

Die Erfindung betrifft Ringkolbenzähler gemäß dem Oberbegriff des Anspruchs 1.

Ringkolbenzähler, die zu den unmittelbaren Volumenzählern zählen, besitzen eine Meßkammer, die von der gesamten Flüssigkeitsmenge zwangsläufig durchströmt wird. Dabei geht ein Teil der potentiellen Energie der zu messenden Flüssigkeit für den Antrieb des Zählers verloren. Der hierbei entstehende Druckabfall wird als Druckverlust delta p bezeichnet. Er entsteht durch Wasserumlenkungen, Querschnittsänderungen längs des Strömungsweges, Antrieb des Ringkolbens usw.

In der Meßkammer befindet sich der Ringkolben, der während des Meßvorgangs von der Hochdruck- auf die Niederdruckseite geschoben wird. Dies geschieht selbsttätig durch den Flüssigkeitsstrom. Bei einer Umdrehung des Ringkolbens werden zwei verschiedene Volumina von jeweils gleichbleibender und bestimmter Größe transportiert. Hierbei bewegt sich der Ringkolben mit seinem unteren Kolbenzapfen um den Mittelzapfen der Meßkammer.

Der Mantel des Ringkolbens ist über seine gesamte Höhe geschlitzt. Dieser Schlitz bewegt sich bei jeder Ringkolbenumdrehung einmal hin- und hergehend entlang einer Trennwand in der Meßkammer. Die oszillierende Bewegung hat den Vorteil der selbsttätigen Rückkehr des Ringkolbens in seine Ausgangsstellung ohne Hilfe von zusätzlichen Umsteuereinrichtungen, Ventilen, Schiebern usw. Durch die innere und äußere Kolbenführung ist die Bewegung des Ringkolbens zwangsläufig.

Vom oberen Kolbenzapfen des Ringkolbens wird ein Mitnehmer angetrieben, der die kreisenden Bewegungen des Zapfens auf ein Zählwerk überträgt. Man vergleiche Orlicek und Reuther "Zur Technik der Mengen- und Durchflußmessung von Flüssigkeiten", R. Oldenbourg Verlag, München-Wien 1971, Seiten 44 bis 57.

Die Meßgenauigkeit des Ringkolbenzählers hängt weitgehend von der Maßhaltigkeit der Meßkammerteile ab. Je größer die Spalte zwischen Ringkolben und Meßkammer, um so mehr Flüssigkeit kann ungemessen passieren und um so größer wird der Meßfehler. Allerdings muß ein Mindestspiel zwischen Ringkolben und Meßkammer vorhanden sein, damit der Ringkolben nicht klemmt. Typische Werte für die Spalte zwischen den sich bewegenden Teilen sind kleiner/gleich 10 μm.

Es versteht sich, daß die Spaltverluste die Meßgenauigkeit um so mehr verschlechtern, je kleiner die zu messenden Durchflüsse sind. Die Spaltverluste "$Q_{Spalt}$" berechnen sich nach folgender Formel:

$$Q_{Spalt} = A_{Spalt} \cdot \sqrt{2 \cdot g \cdot (delta\ p)}$$

wobei "$A_{Spalt}$" die Summe aller Spaltflächen, "g" die Erdbeschleunigung und "delta p" den Druckabfall repräsentieren.

Nach dem Stand der Technik gibt es drei Varianten, wie die zu messende Flüssigkeit durch den Ringkolbenzähler zu führen ist.

Bei der ersten Variante strömt die Flüssigkeit durch eine sichelförmige Öffnung im Boden der Meßkammer ein und durch eine weitere sichelförmige Öffnung im Boden der Meßkammer wieder aus. Dabei übt die Strömung einseitige Kräfte auf den Ringkolben aus, so daß dieser eine erhöhte Reibung und Abnutzung erfährt. Beides beeinflußt die Meßgenauigkeit negativ.

Bei der zweiten Variante strömt die zu messende Flüssigkeit durch eine sichelförmige Öffnung im Boden der Meßkammer ein und durch eine ebenfalls sichelförmige Öffnung im Deckel der Meßkammer wieder aus. Einlaß- und Auslaßöffnungen können ihre Position auch vertauschen. Auch hierbei werden auf den Ringkolben einseitige Kräfte ausgeübt, die die Meßgenauigkeit ungünstig beeinflussen.

Bei der dritten Variante ist sowohl im Boden wie im Deckel der Meßkammer je eine Einströmöffnung vorgesehen, durch die je eine Hälfte der zu messenden Flüssigkeit in die Meßkammer einströmt. Rechteckige Schlitze im Mantel des Ringkolbens und im Mantel der Meßkammer bilden die Auslaßöffnungen. Aufgrund dieser Flüssigkeitsführung kompensieren sich jedenfalls im Idealfall die auf den Ringkolben wirkenden axialen Strömungskräfte selbsttätig. Man vergleiche die FR-A 454 609 und Orlicek, Adalbert = "Zur Technik der Mengen- und Durchflußmessung von Flüssigkeiten", R. Oldenbourg Verlag 1971, S. 44 - 57.

Die vorliegende Erfindung betrifft Ringkolbenzähler mit einer Flüssigkeitsführung gemäß Variante drei.

Da sich bei dieser Art von Ringkolbenzählern die auf den Ringkolben wirkenden axialen Strömungskräfte selbsttätig kompensieren, sollten sie eine höhere Meßgenauigkeit besitzen als die Ringkolbenzähler nach den Varianten 1 und 2. Tatsächlich ist jedoch das Gegenteil der Fall. Aus diesem Grunde konnten sich Ringkolbenzähler gemäß Variante drei bisher nicht durchsetzen.

Der vorliegenden Erfindung liegt die Aufgabe zugrunde, die Meßfehler der gattungsgemäßen Ringkolbenzähler zu verringern.

Diese Aufgabe wird gelöst durch Ringkolbenzähler mit den Merkmalen des Anspruchs 1 und/oder des Anspruchs 4.

Um zu der vorliegenden Erfindung zu gelangen, war es erforderlich, zunächst die Ursachen für die geringe Meßgenauigkeit der gattungsgemäßen Ringkolbenzähler zu analysieren. Dabei stellte sich heraus, daß die Ursache die Auslaßschlitze in den Mänteln von Meßkammer und Ringkolben sind. Im Bereich der Auslaßschlitze können die Mäntel ihre abdichtende Funktion nicht mehr erfüllen. Dadurch kommt es immer dann, wenn der Ringkolben den Bereich der Auslaßschlitze erreicht, zu einer zwar kurzzeitigen, aber deutlichen Vergrößerung des effektiven Spaltes "$A_{Spalt}$", daraus resultierend zu höheren Spaltverlusten "$Q_{Spalt}$" und damit zu der Verschlechterung der Meßgenauigkeit.

Die erfindungsgemäßen Dichtleisten sorgen nur dafür, daß die sich kurzzeitig öffnenden Zusatzspalte nach Art einer Labyrinthdichtung verschlossen bleiben, wodurch die effekte Spaltfläche "$A_{Spalt}$" und mit ihr die Spaltverluste "$Q_{Spalt}$" sinken und die Meßgenauigkeit deutlich ansteigt.

Gemäß einer ersten Variante der Erfindung ist die äußere Dichtleiste an der Meßkammer befestigt und ragt in die Auslaßöffnung des Ringkolbens.

Gemäß einer zweiten Variante ist die äußere Dichtleiste am Ringkolben befestigt und ragt in die Auslaßöffnung der Meßkammer.

Gemäß einer dritten Variante ist die innere Dichtleiste an der Außenwand des Führungsrings befestigt und ragt in die Auslaßöffnung des Ringkolbens.

Gemäß einer vierten Variante ist in die Außenwand des Führungsrings eine Nut eingearbeitet. Die innere Dichtleiste ist am Ringkolben befestigt und ragt in diese Nut hinein.

Es versteht sich, daß der Effekt dann optimal ist, wenn innere und äußere Dichtleiste gleichzeitig angebracht sind.

Vorteilhafterweise sind die Dichtleisten einstückig angespritzt.

Anhand der Zeichnung soll die Erfindung in Form von Ausführungsbeispielen näher erläutert werden. Es zeigen jeweils rein schematisch

Fig. 1      eine Draufsicht auf einen Ringkolbenzähler mit radialen Auslaßschlitzen in herkömmlicher Bauart,

Fig. 2      den Ringkolbenzähler der Fig. 1 mit verdrehtem Ringkolben,

Fig. 3      den Ringkolbenzähler der Fig. 1 mit äußerer Dichtleiste,

Fig. 4      den Ringkolbenzähler der Fig. 1 mit alternativer äußerer Dichtleiste,

Fig. 5      den Ringkolbenzähler der Fig. 1, wobei der Ringkolben um 180° weitergewandert ist,

Fig. 6      den Ringkolbenzähler der Fig. 5 mit verdrehtem Ringkolben,

Fig. 7      den Ringkolbenzähler der Fig. 5 mit einer inneren und einer äußeren Dichtleiste und

Fig. 8      an einem Schnitt die Flüssigkeitsführung durch einen Ringkolbenzähler der gattungsgemäßen Art.

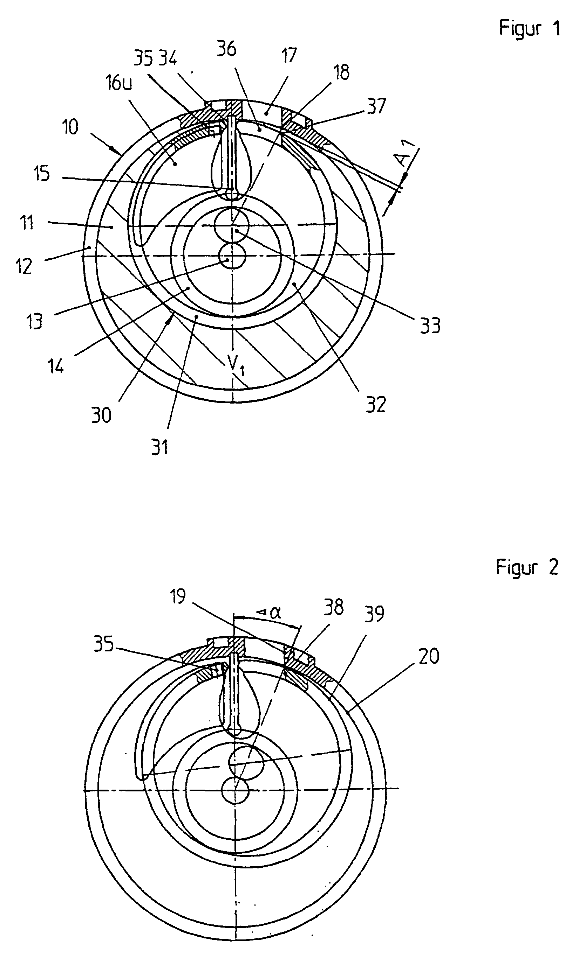

Fig. 1 zeigt als Draufsicht die für die Erläuterung der Erfindung erforderlichen Teile eines Ringkolbenzählers.

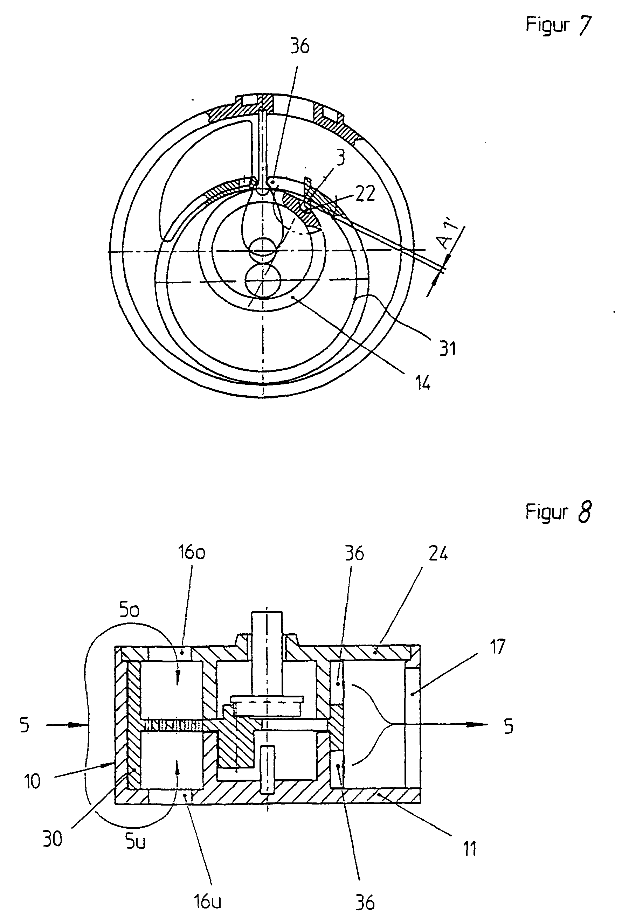

Man erkennt zunächst eine Meßkammer 10 mit einem Boden 11, einem zylindrischen Meßkammermantel 12, einem Mittelzapfen 13, einem Führungsring 14 und einer Trennwand 15. Links neben der Trennwand 15 erkennt man eine sichelförmige Einlaßöffnung 16u für das zu messende Wasser. Eine gleichartige Einlaßöffnung 16o befindet sich in dem aus Gründen der Übersichtlichkeit hier nicht dargestellten Meßkammerdeckel 24 (Fig. 8).

Auf der anderen Seite der Trennwand 15 ist in den Meßkammermantel 12 eine Auslaßöffnung 17 in Form eines rechteckigen Schlitzes eingearbeitet.

Im Inneren der Meßkammer 10 erkennt man einen Ringkolben 30, gebildet aus einem zylindrischen Kolbenmantel 31, einem Kolbenboden 32 und einem Führungszapfen 33. Der Führungszapfen 33 bewegt sich in einer Kreisbahn um den Mittelzapfen 13.

In Kolbenmantel 31 und Kolbenboden 32 ist ein radialer Schlitz 34 eingearbeitet, dank dessen der Ringkolben 30 auf die Trennwand 15 aufgesteckt werden kann. Durch die von der Trennwand 15 bewirkte Geradführung in Kombination mit der durch Mittelzapfen 13 und Führungsring 14 bewirkten Kreisführung führt der Ringkolben 30 die bekannte oszillierende Bewegung aus.

Wie Fig. 1 erkennen läßt, besitzt nicht nur der Meßkammermantel 12, sondern auch der Kolbenmantel 31 eine Auslaßöffnung 36. Diese ist erforderlich, damit auch das Teilmeßvolumen im Inneren des Ringkolbens 30 entleert werden kann.

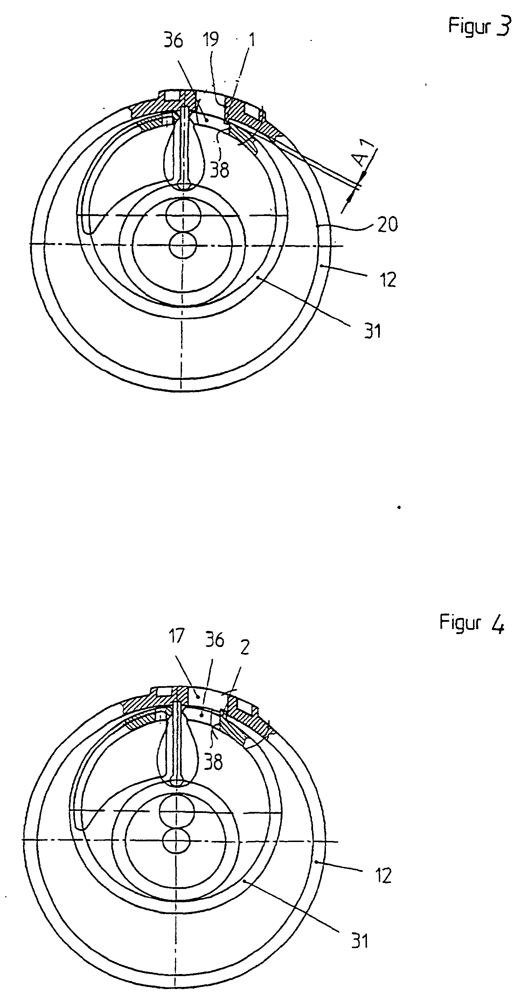

Im Bereich der Auslaßschlitze 17, 36 fehlt je ein Teil des Meßkammermantels 12 und des Kolbenmantels 31. Sobald der Ringkolben 30 die Winkelposition $\alpha$, in Fig. 2 dargestellt, erreicht, bildet sich ein zusätzlicher Spalt, der in der Kolbenposition wie in Fig. 3 dargestellt seine maximale Größe A1 erreicht. Es fließt nun eine Teilmenge des Kammervolumens V1 ungemessen durch den Spalt A1.

Fig. 3 zeigt eine erste Lösung zur Beseitigung des zusätzlichen Spaltes A1. An der Innenwand 20 des Meßkammermantels 12 ist im Bereich der Seitenwand 19 und diese verlängernd eine Dichtleiste 1 angeformt. Diese taucht unmittelbar neben der Seitenwand 38 der Auslaßöffnung 36 im Kolbenmantel 31 in die Auslaßöffnung 36 ein. Dadurch entsteht eine Art Labyrinthdichtung, die den Spalt A1 abdichtet.

Fig. 4 zeigt eine zweite Lösung zur Abdichtung des zusätzlichen Spaltes A1. Eine Dichtleiste 2 ist in Verlängerung der Seitenwand 38 der Auslaßöffnung 36 am Kolbenmantel 31 angeformt und taucht in die Auslaßöffnung 17 im Meßkammermantel 12 ein. Diese Lösung hat den zusätzlichen Vorteil, daß die Dichtleiste 2 die Strömung des äußeren Meßvolumens V1 in Richtung auf die Auslaßöffnung 17 umlenkt, so daß nicht nur die Spaltverluste, sondern auch die Strömungsverluste reduziert werden.

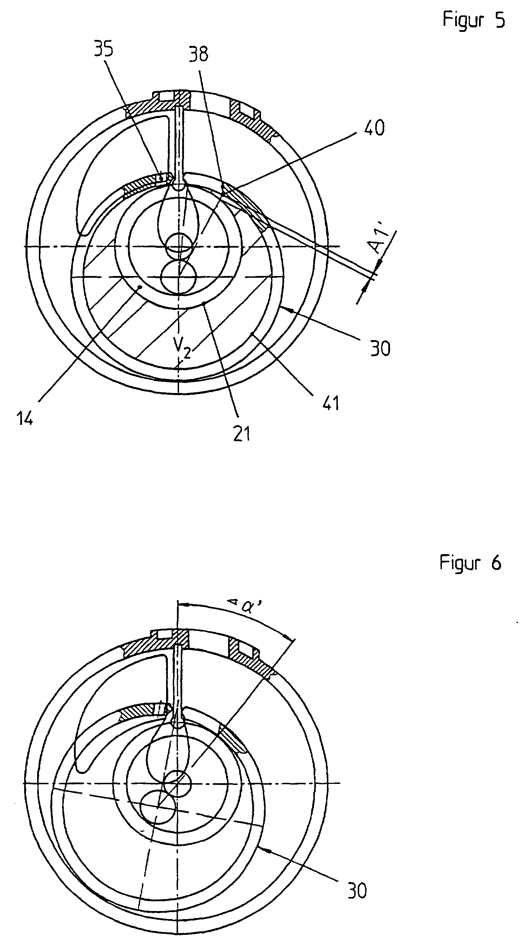

Fig. 5 zeigt den Ringkolbenzähler der Fig. 1, wobei sich jedoch der Ringkolben 30 um 180° weiterbewegt hat. Sobald der Ringkolben 30 die Winkelposition α', in Fig. 6 dargestellt, erreicht, bildet sich ein zusätzlicher Spalt, der in der Kolbenposition wie in Fig. 5 dargestellt seine maximale Größe A1' erreicht. Eine Teilmenge des Kammervolumens V2 fließt ungemessen durch den Spalt A1'.

Fig. 7 zeigt eine Lösung, wie auch der zweite zusätzliche Spalt A1' mit Hilfe einer Dichtleiste 3, angeformt an der Innenseite des Kolbenmantels 31, abgedichtet werden kann. Hierzu ist im Führungszylinder 14 eine Nut 22 eingearbeitet, in die die innere Dichtleiste 3 eintaucht.

In der Verlängerung der inneren Dichtleiste 3 erkennt man die äußere Dichtleiste 2. Mit einer solchen kombinierten Lösung können daher die beiden Spalte A1, A1' nach Art einer Labyrinthdichtung abgedichtet werden, ohne daß irgendeine der Funktionen des Ringkolbenzählers darunter leidet.

Es versteht sich, daß die Abdichtung des inneren Spaltes A1' auch mit Hilfe einer an die Außenseite des Führungsrings 14 angeformten und in die Auslaßöffnung 36 im Kolbenmantel 31 eintauchenden Dichtleiste möglich ist.

Fig. 8 zeigt rein schematisch einen Schnitt durch Meßkammer 10 und Ringkolben 30 eines gattungsgemäßen Ringkolbenzählers. Man erkennt die untere Einlaßöffnung 16u im Boden 11 und die obere Einlaßöffnung 16o im Deckel 24. Die Flüssigkeitsströmung 5 teilt sich in einen oberen und einen unteren Teilstrom 5o, 5u auf. Im Bereich der Auslaßöffnung 17, 36 vereinigen sich die beiden Teilströme 5o, 5u wieder und verlassen die Meßkammer 10. Dadurch kompensieren sich die auf den Ringkolben 30 wirkenden Kräfte selbsttätig, was sich auf Verschleiß und Meßgenauigkeit positiv auswirkt.

**Patentansprüche**

1.  Ringkolbenzähler, umfassend

    - eine Meßkammer (10) mit

        -- einem Boden (11),
        -- einem zylindrischen Meßkammermantel (12),
        -- einem Deckel (24),
        -- einem Mittelzapfen (13),
        -- einem Führungsring (14),
        -- einer Trennwand (15),
        -- je einer Einlaßöffnung (16) in Boden (11) und Deckel (24)
        -- und einer radialen Auslaßöffnung (17) im Meßkammermantel (12),

    - und einen Ringkolben (30) mit

        -- einem zylindrischen Kolbenmantel (31),
        -- einem Zwischenboden (32),
        -- einem oberen und einem unteren Kolbenzapfen (33),
        -- einem Führungsschlitz (34) im Kolbenmantel (31), passend zu der Trennwand (15),
        -- Entlastungsschlitze (35) im Kolbenmantel (31)
        -- und einer radialen Auslaßöffnung (36) im Kolbenmantel (31), passend zur Auslaßöffnung (17) im Meßkammermantel (12),

    **gekennzeichnet durch** das Merkmal:

    - der Spalt (A1) zwischen einer Meßkammerkante (18), gebildet **durch** die Schnittlinie zwischen einer Seitenwand (19) der Auslaßöffnung (17) im Meßkammermantel (12) und dessen Innenwand (20), und einer Ringkolbenkante (37), gebildet **durch** die Schnittlinie zwischen der Seitenwand (38) der Auslaßöffnung (36) im Kolbenmantel (31) und dessen Außenwand (39), ist **durch** eine äußere Dichtleiste (1, 2) abgedichtet.

2.  Ringkolbenzähler nach Anspruch 1, **gekennzeichnet durch** das Merkmal:

    - die äußere Dichtleiste (1) ist an der Meßkammer (10) befestigt und ragt in die Auslaßöffnung (36) des Ringkolbens (30).

3.  Ringkolbenzähler nach Anspruch 1, **gekennzeichnet durch** das Merkmal:

    - die äußere Dichtleiste (2) ist am Ringkolben (30) befestigt und ragt in die Auslaßöffnung (17) der Meßkammer (10).

4.  Ringkolbenzähler, umfassend

    - eine Meßkammer (10) mit

        -- einem Boden (11),
        -- einem zylindrischen Meßkammermantel (12),
        -- einem Deckel (24),
        -- einem Mittelzapfen (13),
        -- einem Führungsring (14),
        -- einer Trennwand (15),
        -- je einer Einlaßöffnung (16) in Boden (11) und Deckel (24)

-- und einer radialen Auslaßöffnung (17) im Meßkammermantel (12),

- und einen Ringkolben (30) mit

-- einem zylindrischen Kolbenmantel (31),
-- einem Zwischenboden (32),
-- einem oberen und einem unteren Kolbenzapfen (33),
-- einem Führungsschlitz (34) im Kolbenmantel (31), passend zu der Trennwand (15),
-- Entlastungsschlitze (35) im Kolbenmantel (31)
-- und einer radialen Auslaßöffnung (36) im Kolbenmantel (31), passend zur Auslaßöffnung (17) im Meßkammermantel (12),

**gekennzeichnet durch** das Merkmal:
- der Spalt (A1') zwischen einer Ringkolbenkante (40), gebildet **durch** die Schnittlinie zwischen der Seitenwand (38) der Auslaßöffnung (36) im Kolbenmantel (31) und dessen Innenwand (41), und der Außenwand (21) des Führungsrings (14) ist **durch** eine innere Dichtleiste (3) abgedichtet.

5. Ringkolbenzähler nach Anspruch 4, **gekennzeichnet durch** das Merkmal:

- die innere Dichtleiste (3) ist an der Außenwand (21) des Führungsrings (14) befestigt und ragt in die Auslaßöffnung (36) des Ringkolbens (30).

6. Ringkolbenzähler nach Anspruch 4, **gekennzeichnet durch** die Merkmale:

- die innere Dichtleiste (3) ist am Ringkolben (30) befestigt,
- in die Außenwand (21) des Führungsrings (14) ist eine Nut (22) eingearbeitet,
- die Dichtleiste (3) ragt in die Nut (22).

7. Ringkolbenzähler nach einem der Ansprüche 1 bis 6, **gekennzeichnet durch** das Merkmal:

- die Dichtleiste (1, 2; 3) ist einstückig angespritzt.

**Claims**

1. An oscillating-piston meter, comprising

- a measuring chamber (10) with

-- a base (11),
-- a cylindrical measuring chamber housing (12),
-- a cover (24),
-- a central journal (13),
-- a guide ring (14),
-- a separating wall (15),
-- a respective inlet opening (16) in the base, (11) and cover (24)
-- and a radial outlet opening (17) in the measuring chamber housing (12),

- and an oscillating piston (30) with

-- a cylindrical piston housing (31),
-- an intermediate base (32),
-- an upper and lower piston pin (33),
-- and a guide slot (34) in the piston housing (31), fitting the separating wall (15),
-- pressure-relief slots (35) in the piston housing (31)
-- and a radial outlet opening (36) in the piston housing (31), fitting the outlet opening (17) in the measuring chamber housing (12),

**characterised by** the feature:

- the clearance (A1) between a measuring chamber edge (18), formed by the line of intersection between a side wall (19) of the outlet opening (17) in the measuring chamber housing (12) and its inner wall (20), and an oscillating-piston edge (37), formed by the line of intersection between the side wall (38) of the outlet opening (36) in the piston housing (31) and its outer wall (39), is sealed by an outer sealing strip (1,2).

2. An oscillating-piston meter according to Claim 1, **characterised by** the feature:

- the outer sealing strip (1) is fastened to the measuring chamber (10) and projects into the outlet opening (36) of the oscillating piston (30).

3. An oscillating-piston meter according to Claim 1, **characterised by** the feature:

- the outer sealing strip (2) is fastened to the oscillating piston (30) and projects into the outlet opening (17) of the measuring chamber (10).

4. An oscillating-piston meter, comprising

- a measuring chamber (10) with

-- a base (11),
-- a cylindrical measuring chamber housing (12),

- -- a cover (24),
- -- a central journal (13),
- -- a guide ring (14),
- -- a separating wall (15),
- -- a respective inlet opening (16) in the base (11) and cover (24)
- -- and a radial outlet opening (17) in the measuring chamber housing (12),

- and an oscillating piston (30) with
- a cylindrical piston housing (31),

- -- an intermediate base (32),
- -- an upper and lower piston pin (33),
- -- and a guide slot (34) in the piston housing (31), fitting the separating wall (15),
- -- pressure-relief slots (36) in the piston housing (31)
- -- and a radial outlet opening (36) in the piston housing (31), fitting the outlet opening (17) in the measuring chamber housing (12),

**characterised by** the feature:

- the clearance (A1') between an oscillating-piston edge (40), formed by the line of intersection between the side wall (38) of the outlet opening (36) in the piston housing (31) and its inner wall (41), and the outer wall (21) of the guide ring (14) is sealed by an inner sealing strip (3).

**5.** An oscillating-piston meter according to Claim 4, **characterised by** the feature:

- the inner sealing strip (3) is fastened to the outer wall (21) of the guide ring (14) and projects into the outlet opening (36) of the oscillating piston (30).

**6.** An oscillating-piston meter according to Claim 4, **characterised by** the features:

- the inner sealing strip (3) is fastened to the oscillating piston (30),
- a groove (22) is provided in the outer wall (21) of the guide ring (14),
- the sealing stip (3) projects into the groove (22).

**7.** An oscillating-piston meter according to any one of Claims 1 to 6, **characterised by** the feature:

- the sealing strip (1,2;3) is injection-moulded in one piece.

**Revendications**

**1.** Compteur à piston annulaire comprenant

- une chambre de mesure (10) avec

  - - un fond (11),
  - - une enveloppe cylindrique de chambre de mesure (12),
  - - un couvercle (24),
  - - un tenon central (13),
  - - une bague de guidage (14),
  - - une paroi de séparation (15)
  - - un orifice d'admission (16) dans le fond (11) et dans le couvercle (24)
  - - et un orifice d'évacuation (17) radial dans l'enveloppe de chambre de mesure (12),

- et un piston annulaire (30) avec

  - - une enveloppe de piston (31) cylindrique,
  - - un fond intermédiaire (32),
  - - un tenon de piston supérieur et un tenon de piston inférieur (33),
  - - une fente de guidage (34) dans l'enveloppe de piston (31), adaptée à la paroi de séparation (15),
  - - des fentes de décharge (35) dans l'enveloppe de piston (31)
  - - et un orifice d'évacuation (36) radial dans l'enveloppe de piston (31), adapté à l'orifice d'évacuation (17) dans l'enveloppe de chambre de mesure (12),

  **caractérisé par** la caractéristique suivante :

- la fente (A1) entre une arête de chambre de mesure (18), formée par la ligne d'intersection entre une paroi latérale (19) de l'orifice d'évacuation (17) dans l'enveloppe de chambre de mesure (12) et sa paroi interne (20), et une arête du piston annulaire (37), formée par la ligne d'intersection entre la paroi latérale (38) de l'orifice d'évacuation (36) dans l'enveloppe de piston (31) et sa paroi externe (39), est rendue étanche par une baguette d'étanchéité (1, 2) externe.

**2.** Compteur à piston annulaire selon la revendication 1, **caractérisé par** la caractéristique suivante :

- la baguette d'étanchéité (1) externe est fixée sur la chambre de mesure (10) et dépasse dans l'orifice d'évacuation (36) du piston annulaire (30)

**3.** Compteur à piston annulaire selon la revendication 1, **caractérisé par** la caractéristique suivante :

- la baguette d'étanchéité (1) externe est fixée sur le piston annulaire (30) et dépasse dans l'orifice d'évacuation (17) de la chambre de mesure (10).

**4.** Compteur d'eau à piston annulaire comprenant

- une chambre de mesure (10) avec

  - - un fond (11),
  - - une enveloppe cylindrique de chambre de mesure (12),
  - - un couvercle (24),
  - - un tenon central (13),
  - - une bague de guidage (14),
  - - une paroi de séparation (15)
  - - un orifice d'admission (16) dans le fond (11) et dans le couvercle (24)
  - - et un orifice d'évacuation (17) radial dans l'enveloppe de chambre de mesure (12),

- et un piston annulaire (30) avec

  - - une enveloppe de piston (31) cylindrique,
  - - un fond intermédiaire (32),
  - - un tenon de piston supérieur et un tenon de piston inférieur (33),
  - - une fente de guidage (34) dans l'enveloppe de piston (31), adaptée à la paroi de séparation (15),
  - - des fentes de décharge (35) dans l'enveloppe de piston (31)
  - - et un orifice d'évacuation (36) radial dans l'enveloppe de piston (31), adapté à l'orifice d'évacuation (17) dans l'enveloppe de chambre de mesure (12),

  **caractérisé par** la caractéristique suivante :

  - la fente (A1') entre une arête du piston annulaire (40), formée par la ligne d'intersection entre la paroi latérale (38) de l'orifice d'évacuation (36) dans l'enveloppe de piston (31) et sa paroi interne (41), et la paroi externe (21) de la bague de guidage (14) est rendue étanche par une baguette d'étanchéité (3) intérieure.

**5.** Compteur à piston annulaire selon la revendication 4, **caractérisé par** la caractéristique suivante :

- la baguette d'étanchéité (3) intérieure est fixée sur la paroi externe (21) de la bague de guidage (14) et dépasse dans l'orifice d'évacuation (36) du piston annulaire (30).

**6.** Compteur à piston annulaire selon la revendication 4, **caractérisé par** les caractéristiques suivantes :

- la baguette d'étanchéité (3) intérieure est fixée sur le piston annulaire (30),
- une rainure (22) est intégrée dans la paroi externe (21) de la bague de guidage (14),
- la baguette d'étanchéité (3) dépasse dans la rainure (22).

**7.** Compteur à piston annulaire selon l'une quelconque des revendications 1 à 6, **caractérisé par** la caractéristique suivante :

- la baguette d'étanchéité (1, 2 ; 3) est injectée d'un seul tenant.

Figur 1

Figur 2

8

Figur 3

Figur 4

Figur 5

35    38    40

A1'

30

V₂

14    21    41

Figur 6

α'

30

Figur 7

Figur 8